# EUROPEAN PATENT APPLICATION

(11) **EP 1 289 264 A2**
(43) Date of publication of application: **05.03.2003**
(21) Application number: 02255793.8
(22) Date of filing: 20.08.2002
(51) Int. Cl.: H04N 1/40

(54) **System and method of detecting scanned halftone image and enhancing such image for reproduction**

(30) Priority: 31.08.2001 US 945062
(71) Applicant: Hewlett-Packard Company, Palo Alto, CA 94304 (US)
(72) Inventor: Jia, Charles Chi, San Diego, CA 92129 (US)
(74) Representative: Jackson, Richard Eric

(57) **Abstract**

A system and method of processing a scanned image (12) produced by scanning a halftone image formed of a plurality of image dots and having a halftone resolution and at least one halftone angle includes detecting at least one halftone characteristic (32) of the scanned image, dividing the scanned image into a plurality of image sections (34) based on the at least one halftone characteristic, and enhancing each of the image sections of the scanned image to create a plurality of enhanced image sections (36). Each image section of the scanned image includes a plurality of pixels and at least one scanned image dot formed within the plurality of pixels. As such, enhancing each of the image sections includes diffusing the at least one scanned image dot of each of the image sections.

## Description

### The Field of the Invention

The present invention relates generally to image scanning systems, and more particularly to a system and method of detecting an image scanned from a halftone image and enhancing the image for reproduction.

### Background of the Invention

Halftoning is a technique used to create images with varying shades or levels of gray or other colors. More specifically, with halftoning, patterns of closely spaced individual dots of black or an appropriate color, such as cyan, yellow, or magenta, are formed to create an image. Thus, by using halftoning, the illusion of more grays or colors other than those within a color gamut of a device, such as a display or printer, is created. The varying shades or levels of gray or other colors are achieved by varying the size and/or spacing of the individual dots.

A conventional scanning system used for scanning and reproducing an image typically includes a light source and a sensor array, such as a charge coupled device (CCD) or contact imaging sensor (CIS), which includes light receptors which can detect variations in light intensity and frequency. As such, the light source illuminates the image and the sensor array converts reflected or transmitted light from the image into electrical signals. Thus, the electrical signals can then be stored in a file, manipulated by programs, and/or used for reproduction of the image by, for example, a display and/or a printer.

Unfortunately, scanning a halftone image with the conventional scanning system may create image artifacts or defects which degrade image quality. For example, the conventional scanning system may boost the dot pattern of the halftone image such that the individual image dots themselves appear in the scanned image.

Accordingly, a need exists for processing a scanned halftone image to improve image quality. In particular, a need exists for detecting whether a scanned image is based on a halftone image and, if so, enhancing the scanned image for reproduction.

### Summary of the Invention

One aspect of the present invention provides a method of processing a scanned image produced by scanning a halftone image formed of a plurality of image dots and having a halftone resolution and at least one halftone angle. The method includes detecting at least one halftone characteristic of the scanned image, dividing the scanned image into a plurality of image sections based on the at least one halftone characteristic, and enhancing each of the image sections of the scanned image to create a plurality of enhanced image sections. Each image section of the scanned image includes a plurality of pixels and at least one scanned image dot formed within the plurality of pixels. As such, enhancing each of the image sections includes diffusing the at least one scanned image dot of each of the image sections.

Another aspect of the present invention provides a system for processing a scanned image produced from a halftone image formed of a plurality of image dots and having a halftone resolution and at least one halftone angle. The system includes a halftone characteristic detection unit adapted to detect at least one halftone characteristic of the scanned image, an image sectioning unit adapted to divide the scanned image into a plurality of image sections based on the at least one halftone characteristic, and an image enhancement unit adapted to create a plurality of enhanced image sections. Each of the image sections include a plurality of pixels and at least one scanned image dot formed within the plurality of pixels. As such, the image enhancement unit is adapted to diffuse the at least one scanned dot of each of the image sections to create a respective one of the enhanced image sections.

### Brief Description of the Drawings

Figure 1 is a schematic illustration of one embodiment of an image processing system according to the present invention.
Figure 2 is a schematic illustration of one embodiment of an image processing unit of the image processing system of Figure 1.
Figure 3 is a schematic illustration of one embodiment of a halftone characteristic detection unit of the image processing unit of Figure 2.
Figure 4 is an enlarged schematic illustration of one embodiment of a portion of a filtered image including a plurality of scanned image dots.
Figure 5 is an enlarged schematic illustration of one embodiment of a portion of a scanned halftone image divided into a plurality of image sections each including at least one scanned image dot.
Figure 6 is a graphical representation of a scanned image dot of one of the image sections of Figure 5.
Figure 7 is a graphical representation of diffusing the scanned image dot of Figure 6.
Figure 8 is a schematic illustration of one embodiment of an image reproduction unit of the image processing unit of Figure 2.
Figure 9 is a schematic illustration of another embodiment of an image reproduction unit of the image processing unit of Figure 2.
Figure 10 is a flow diagram illustrating one embodiment of a method of processing a scanned halftone image according to the present invention.
Figure 11 is a flow diagram illustrating one embodiment of detecting a halftone characteristic of the scanned halftone image in the method of Figure 10.

### Description of the Preferred Embodiments

In the following detailed description of the preferred embodiments, reference is made to the accompanying drawings which form a part hereof, and in which is shown by way of illustration specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

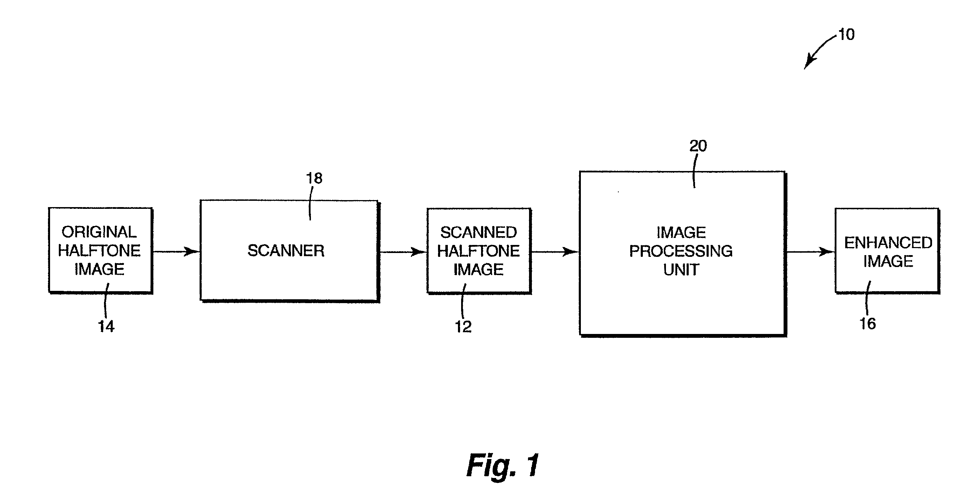

Figure 1 illustrates one embodiment of an image processing system 10 according to the present invention. Image processing system 10 detects whether a scanned image 12 has been produced by scanning a halftone image 14 and, if so, enhances scanned image 12 to create an enhanced image 16 with improved image quality. Halftone image 14, as the original image of image processing system 10, is defined to include any pictorial, graphical, and/or textural characters, symbols, illustrations, and/or other representation of information.

Halftone image 14 is produced using a halftoning process. Halftoning, as is well known in the art, uses patterns of individual dots to create various colors or grays with a device, such as a printer or a display. For example, with halftoning, colors other than cyan, yellow, magenta, black, red, green, and/or blue, including varying shades or levels of such colors, can be created with a device. As such, halftone image 14 includes a plurality of image dots with an intensity or darkness density of the image dots being varied to produce an image.

Halftone image 14 has a halftone resolution and at least one halftone angle. More specifically, the image dots of halftone image 14 are arranged in rows that are evenly spaced from one another and oriented at an angle. As such, spacing of the rows establishes the halftone resolution of halftone image 14 and the angle of the rows establishes the halftone angle of halftone image 14.

As is well known in the art, when halftone image 14 is a black and white image, halftone image 14 typically has one halftone angle. However, when halftone image 14 is a color image, halftone image 14 typically has different halftone angles for each of the separate colors being used to create the image. For example, if halftone image 14 is created from the colors cyan, yellow, and magenta, cyan may have a halftone angle of 15 degrees, yellow may have a halftone angle of 45 degrees, and magenta may have a halftone angle of 75 degrees. Thus, reference herein to the halftone angle of halftone image 14 is defined to include one or more halftone angles of halftone image 14.

Scanned image 12 is created by scanning halftone image 14 with, for example, a scanner 18. Scanner 18 includes, for example, a light source (not shown) which illuminates halftone image 14 and a sensor array (not shown), such as a charge coupled device (CCD) or contact imaging sensor (CIS), which converts reflected or transmitted light into electrical signals, as is well known in the art. Each element of the sensor array corresponds to a small area, commonly referred to as a picture element or pixel, and produces a data signal that is representative of the intensity of light from the area.

To create enhance image 16 from scanned image 12, image processing system 10 includes an image processing unit 20. In one embodiment, as described below, image processing unit 20 detects at least one halftone characteristic of scanned image 12, divides scanned image 12 into a plurality of image sections based on the halftone characteristic, and enhances each of the image sections of scanned image 12 to create a plurality of enhanced image sections. As such, image processing unit 20 produces enhanced image 16 based on the enhanced image sections.

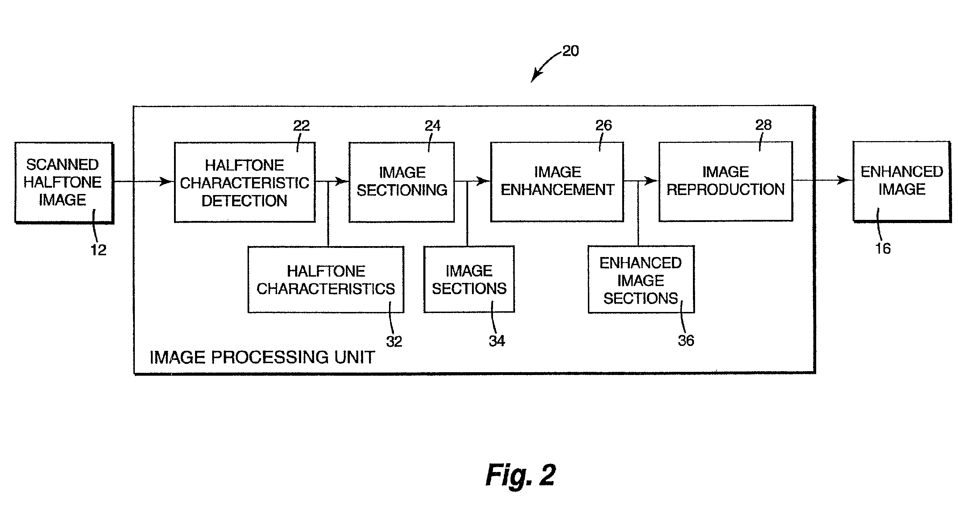

In one embodiment, as illustrated in Figure 2, image processing unit 20 includes a halftone characteristic detection module or unit 22, an image sectioning module or unit 24, an image enhancement module or unit 26, and an image reproduction module or unit 28. As described below, halftone characteristic detection unit 22 detects one or more halftone characteristics 32 of scanned image 12, image sectioning unit 24 divides scanned image 12 into a plurality of image sections 34 based on halftone characteristics 32 of scanned image 12, image enhancement unit 26 enhances image sections 34 to create a plurality of enhanced image sections 36, and image reproduction unit 28 produces enhanced image 16 based on enhanced image sections 36.

Image processing unit 20 includes hardware, software, firmware, or a combination of these. In one embodiment, image processing unit 20 is included in a computer, computer server, or other microprocessor based system capable of performing a sequence of logic operations. Components of image processing unit 20, including halftone characteristic detection unit 22, image sectioning unit 24, image enhancement unit 26, and/or image reproduction unit 28, can be implemented in hardware via a microprocessor, programmable logic device, or state machine, in firmware, or in software within a given device. Halftone characteristic detection unit 22, image sectioning unit 24, image enhancement unit 26, and/or image reproduction unit 28 may be implemented, for example, as subroutines of a computer program.

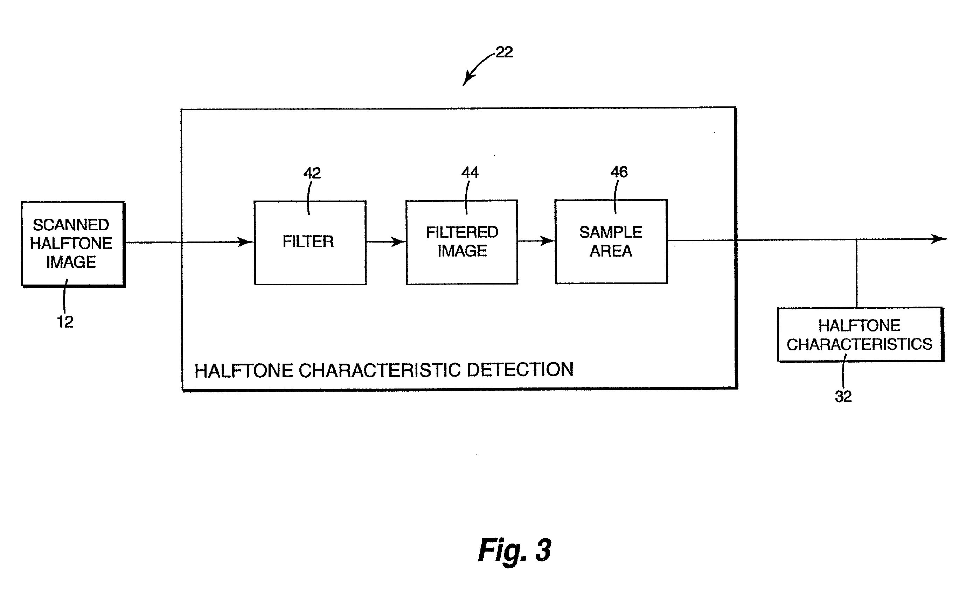

In one embodiment, as illustrated in Figure 3, halftone characteristic detection unit 22 includes a filter 42 which filters scanned image 12 and creates a filtered image 44. Preferably, filter 42 is a low-pass filter such that filtered image 44 has a resolution less than that of scanned image 12. As such, halftone characteristic detection unit 22 identifies a sample area 46 of filtered image 44 which has a predetermined darkness density. For example, with white having a darkness density of approximately zero percent and black having a darkness density of approximately 100 percent, halftone characteristic detection unit 22 identifies an area of filtered image 44 which has sufficient contrast. In one illustrative embodiment, sample area 46 is identified which has a predetermined darkness density in a range of approximately 20 percent to approximately 50 percent. In another illustrative embodiment, sample area 46 is identified which has a predetermined darkness density of approximately 40 percent.

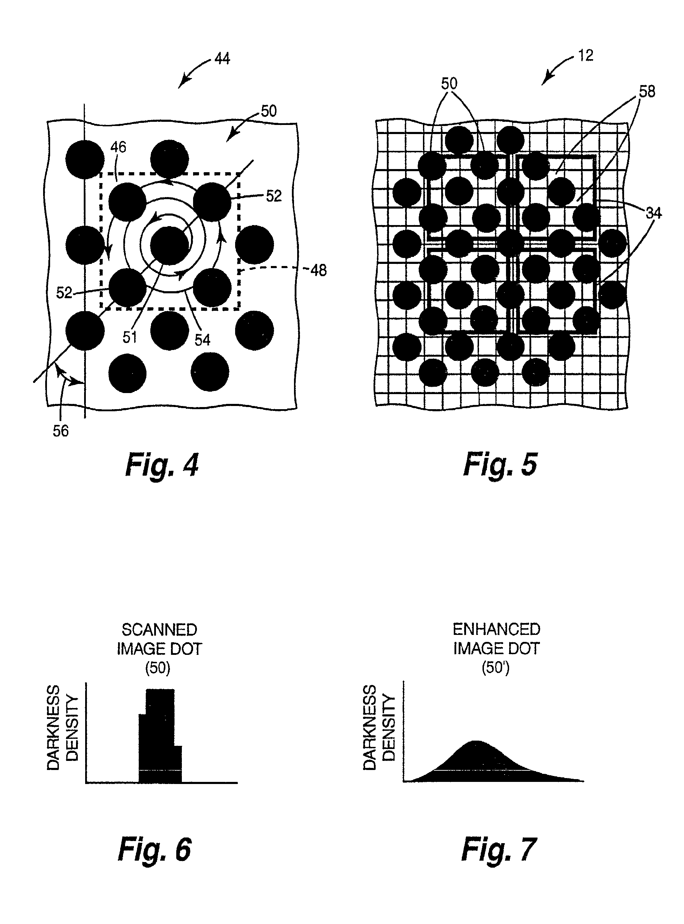

Figure 4 is an enlarged schematic illustration of a portion of filtered image 44. As such, filtered image 44 includes a plurality of scanned image dots 50, as filtered by filter 42, and sample area 46, as identified within dashed line 48. To detect halftone characteristics 32 of scanned image 12, halftone characteristic detection unit 22 locates a first scanned image dot 51 within sample area 46 and, relative to first scanned image dot 51, a number of additional scanned image dots 52 within sample area 46. As such, halftone characteristic detection unit 22 determines a relationship between first scanned image dot 51 and additional scanned image dots 52, as described below.

In one embodiment, halftone characteristic detection unit 22 locates additional scanned image dots 52 relative to first scanned image dot 51 by searching in a spiral pattern, as illustrated by spiral line 54, from first scanned image dot 51. More specifically, halftone characteristic detection unit 22 searches radially and outwardly from first scanned image dot 51 to locate additional scanned image dots 52 within sample area 46. While spiral searching for additional scanned image dots 52 is illustrated as occurring in a counterclockwise manner, it is understood that halftone characteristic detection unit 22 may search for additional scanned image dots 52 in a clockwise manner.

In addition, in one embodiment, searching in a spiral pattern is performed within a single scanned image dot 50 to find and/or locate the image dot itself. For example, halftone characteristic detection unit 22 finds first scanned image dot 51 and locates the boundaries of first scanned image dot 51 by searching in a spiral pattern within a scanned image dot 50 of sample area 46.

After locating additional scanned image dots 52 relative to first scanned image dot 51, halftone characteristic detection unit 22 determines a relationship between first scanned image dot 51 and additional scanned image dots 52. More specifically, halftone characteristic detection unit 22 determines a distance between first scanned image dot 51 and additional scanned image dots 52 and an orientation of additional scanned image dots 52 to first scanned image dot 51. As such, based on the distance between first scanned image dot 51 and additional scanned image dots 52, halftone characteristic detection unit 22 establishes a number of image dots per unit area of scanned image 12. In addition, based on the orientation of additional scanned image dots 52 to first scanned image dot 51, halftone characteristic detection unit 22 establishes an angle 56 of first scanned image dot 51 and additional scanned image dots 52 relative to, for example, a vertical axis of scanned image 12. Thus, the number of scanned image dots 50 per unit area of scanned image 12 corresponds to the halftone resolution of halftone image 14 and the angle of scanned image dots 50 of scanned image 12 corresponds to the halftone angle of halftone image 14. Accordingly, the halftone resolution and the halftone angle, as detected by halftone characteristic detection unit 22, constitute halftone characteristics 32 of scanned image 12.

Returning to Figure 2, after halftone characteristic detection unit 22 detects halftone characteristics 32 of scanned image 12, halftone characteristics 32 are input to image sectioning unit 24. As such, image section unit 24 divides scanned image 12 into image sections 34 based on halftone characteristics 32. By dividing scanned image 12 into multiple image sections 34, each image section 34 can be processed differently based on halftone characteristics 32 of that section.

Figure 5 is an enlarged schematic illustration of a portion of scanned image 12. As such, scanned image 12 includes scanned image dots 50. Thus, based on the halftone resolution of scanned image 12 or the halftone resolution and the halftone angle of scanned image 12, image sectioning unit 24 divides scanned image 12 into image sections 34. By considering the halftone angle of scanned image 12 with the halftone resolution of scanned image 12, a more accurate assessment of the halftone resolution of halftone image 14 is established. Accordingly, a size of image sections 34 is proportional to the halftone resolution of halftone image 14. Each image section 34 includes a plurality of pixels 58 with one or more scanned image dots 50 being formed within the plurality of pixels 58. In one embodiment, each scanned image dot 50 occupies multiple pixels 58.

It is understood that Figures 4 and 5 are simplified illustrations of filtered image 44 and scanned image 12, respectively. For example, while each image section 34 of scanned image 12 is illustrated as including between four and five scanned image dots 50, it is understood that each image section 34 may include thousands of scanned image dots 50.

With scanned image 12 divided into image sections 34, image enhancement unit 26 enhances image sections 34 and creates enhanced image sections 36. Image enhancement unit 26 enhances image sections 34 by diffusing scanned image dots 50 of image sections 34. More specifically, image enhancement unit 26 reduces an intensity of scanned image dots 50 by distributing a darkness density of each scanned image dot 50 to one or more adjacent pixels 58. As such, scanned image dots 50 of scanned image 12 are blended with adjacent pixels 58. Thus, image enhancement unit 26 softens or smoothes scanned image dots 50 of scanned image 12.

Figures 6 and 7 are simplified schematic illustrations of a scanned image dot 50 before enhancement by image enhancement unit 26 and a scanned image dot, referred to as enhanced image dot 50', after enhancement by image enhancement unit 26, respectively. As illustrated in Figure 6, before enhancement by image enhancement unit 26, scanned image dot 50 has distinct darkness densities. As such, scanned image dot 50 appears in scanned image 12 as a dot having distinct intensity or darkness density differences. In addition, scanned image dot 50 may have a substantially uniform darkness density. As such, scanned image dot 50 appears as a distinct dot in scanned image 12.

As illustrated in Figure 7, however, after enhancement by image enhancement unit 26, enhanced image dot 50' has a more distributed darkness density, including a possibly reduced maximum darkness density. As such, a darkness density of one or more pixels 58 of enhanced image dot 50' is reduced and a darkness density of one or more pixels 58 of enhanced image dot 50' is increased. Thus, an overall area of enhanced image dot 50' is increased such that an area of enhanced image dot 50' is greater than that of scanned image dot 50. As such, enhanced image dot 50' appears as a softer dot in scanned image 12. While the maximum darkness density of enhanced image dot 50' is illustrated as being reduced, it is understood that the maximum darkness density of enhanced image dot 50' may remain the same as that of scanned image dot 50.

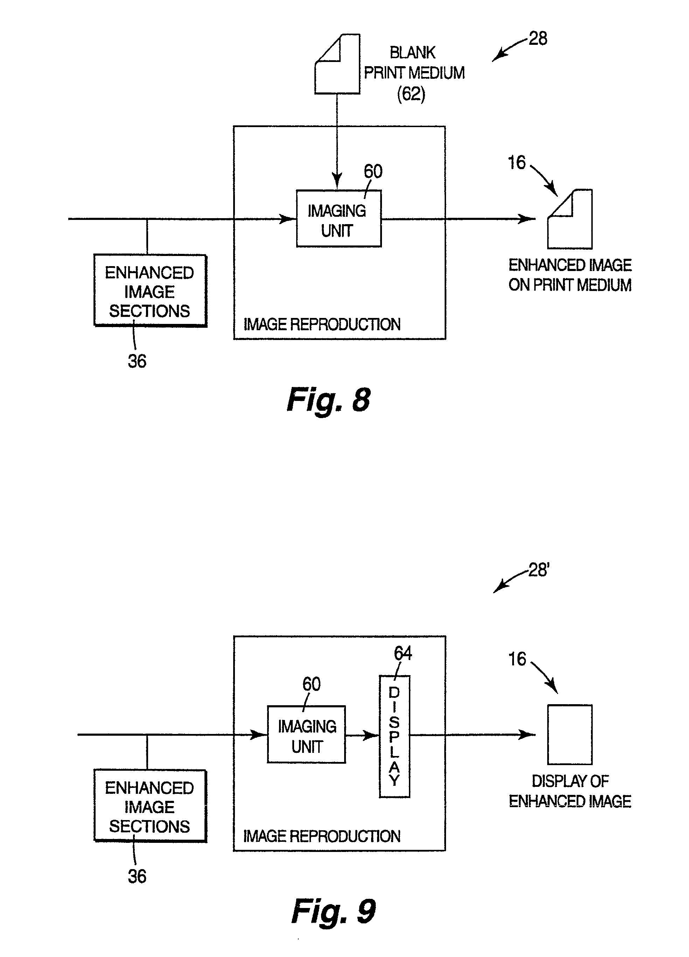

In one embodiment, image processing unit 20 produces enhanced image 16 as a printed image. Thus, as illustrated in Figure 8, one embodiment of image reproduction unit 28 includes an imaging unit 60 which receives enhanced image sections 36 and blank print medium 62 as input. As such, imaging unit 60 processes enhanced image sections 36 and prints enhanced image 16 on print medium 62 based on enhanced image sections 36. Image reproduction unit 28, therefore, reproduces enhanced image 16 as a printed image on print medium 62.

In another embodiment, image processing unit 20 produces enhanced image 16 as a displayed image. Thus, as illustrated in Figure 9, another embodiment of image reproduction unit 28, illustrated as image reproduction unit 28', includes imaging unit 60, as described above, and a display 64. Display 64 may form part of a computer associated with image processing system 10. As such, imaging unit 60 receives enhanced image sections 36 and processes enhanced image sections 36 to display enhanced image 16 on display 64. Image reproduction unit 28', therefore, reproduces enhanced image 16 as a displayed image on display 64.

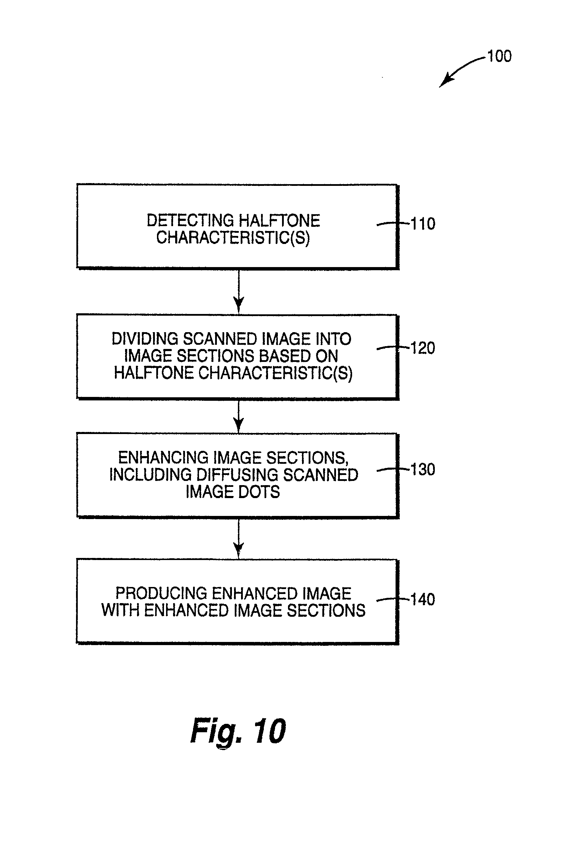

Figure 10 illustrates one embodiment of a method 100 of processing scanned image 12 according to the present invention. Reference is also made to Figures 1-9. At step 110, halftone characteristics 32 of scanned image 12 are detected. More specifically, the halftone resolution and/or halftone angle of scanned image 12 is detected. Halftone characteristics 32 are detected by halftone characteristic detection unit 22, as described above with reference to Figures 3 and 4.

At step 120, scanned image 12 is divided into image sections 34. More specifically, based on halftone characteristics 32, including the halftone resolution and/or halftone angle of scanned image 12, image sectioning unit 24 divides scanned image 12 into image sections 34 as illustrated, for example, in Figure 5.

At step 130, image sections 34 are enhanced by diffusing scanned image dots 50 of each image section 34. More specifically, scanned image dots 50 of image sections 34 are distributed so as to blend with adjacent pixels. Image enhancement unit 26 enhances image sections 34 as described above and illustrated with reference to Figures 6 and 7.

At step 140, enhanced image 16 is produced based on enhanced image sections 34. Enhanced image 16 is produced by image reproduction unit 28 and/or image reproduction unit 28', as described above. More specifically, in one embodiment, production of enhanced image 16 includes printing of enhanced image 16 on print medium 62 by image reproduction unit 28, as described above with reference to Figure 8. In another embodiment, however, production of enhanced image 16 includes display of enhanced image 16 on display 64 of image reproduction unit 28', as described above with reference to Figure 9.

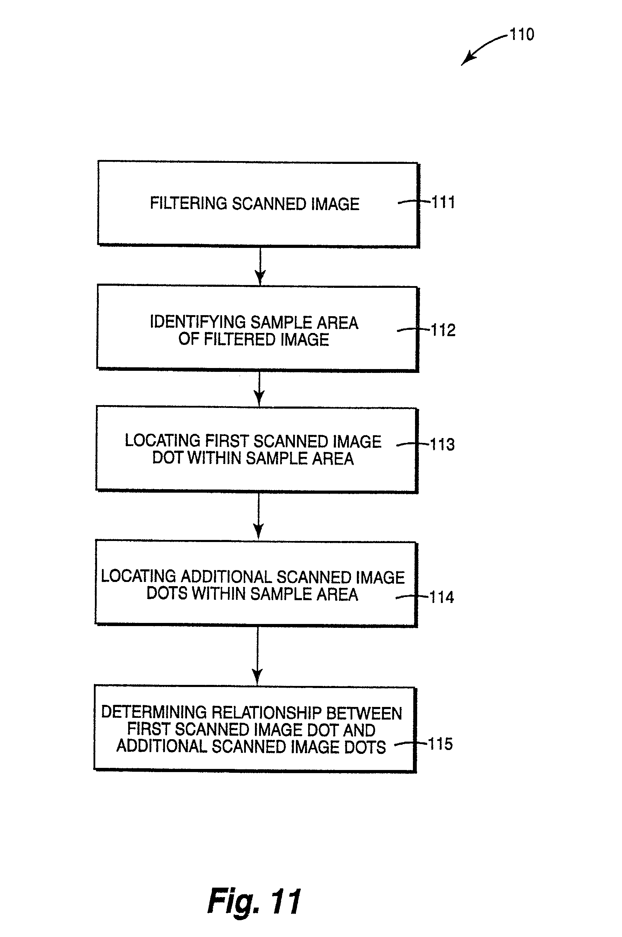

In one embodiment, as illustrated in Figure 11, detecting halftone characteristics 32 of scanned image 12 in step 110 includes filtering scanned image 12, as indicated in step 111, to create filtered image 44, and identifying sample area 46 of filtered image 44, as indicated in step 112. Then, as indicated in step 113, first scanned image dot 51 is located within sample area 46 and, as indicated in step 114, additional scanned image dots 52 are located within sample area 46. Thus, a relationship between first scanned image dot 51 and additional scanned image dots 52 is determined, as indicated in step 115, and as described above.

By detecting halftone characteristics of scanned image 12 and dividing scanned image 12 into image sections 34, image sections 34 can be enhanced. More specifically, scanned image dots 50 of image sections 34 which include halftoning are diffused to distribute a darkness density of scanned image dots 50 and soften or smooth scanned image dots 50. As such, image artifacts or defects created by scanning halftone image 14 are minimized.

By dividing scanned image 12 into multiple image sections 34, different sections of scanned image 12 can be processed independently. For example, if scanned image 12 has sections which include halftoning and sections, such as text and/or line art, which do not include halftoning, scanned image dots of those sections which do not include halftoning will not be processed and diffused. Thus, possible degradation of sections which do not include halftoning is avoided.

Although specific embodiments have been illustrated and described herein for purposes of description of the preferred embodiment, it will be appreciated by those of ordinary skill in the art that a wide variety of alternate and/or equivalent implementations calculated to achieve the same purposes may be substituted for the specific embodiments shown and described without departing from the scope of the present invention. Those with skill in the chemical, mechanical, electro-mechanical, electrical, and computer arts will readily appreciate that the present invention may be implemented in a very wide variety of embodiments. This application is intended to cover any adaptations or variations of the preferred embodiments discussed herein. Therefore, it is manifestly intended that this invention be limited only by the claims and the equivalents thereof.

## Claims

1. A method of processing a scanned image (12) produced by scanning a halftone image (14) formed of a plurality of image dots and having a halftone resolution and at least one halftone angle, the method comprising:
detecting at least one halftone characteristic (32) of the scanned image;
dividing the scanned image into a plurality of image sections (34) based on the at least one halftone characteristic, each image section including a plurality of pixels (58) and at least one scanned image dot (50) formed within the plurality of pixels; and
enhancing each of the image sections of the scanned image to create a plurality of enhanced image sections (36), including diffusing the at least one scanned image dot of each of the image sections.

2. The method of claim 1, wherein detecting the at least one halftone characteristic of the scanned image includes detecting at least one of the halftone resolution and the at least one halftone angle of the halftone image from the scanned image.

3. The method of claim 1, wherein the scanned image has a first resolution, and wherein detecting the at least one halftone characteristic of the scanned image includes filtering the scanned image to create a filtered image (44) having a second resolution, wherein the second resolution is less than the first resolution.

4. The method of claim 3, wherein detecting the at least one halftone characteristic of the scanned image further includes identifying, within the filtered image, a sample area (46) having a predetermined darkness density, locating a first scanned image dot (51) within the sample area, locating, relative to the first scanned image dot, a plurality of additional scanned image dots (52) within the sample area, and determining a relationship between the first scanned image dot and the additional scanned image dots.

5. The method of claim 4, wherein the predetermined darkness density of the sample area is in a range of approximately 20 percent to approximately 50 percent.

6. The method of claim 5, wherein the predetermined darkness density of the sample area is approximately 40 percent.

7. The method of claim 4, wherein determining the relationship between the first scanned image dot and the additional scanned image dots includes determining at least one of a distance between the first scanned image dot and the additional scanned image dots and an orientation of the additional scanned image dots to the first scanned image dot, wherein the distance between the first scanned image dot and the additional scanned image dots correlates to the halftone resolution of the halftone image, and the orientation of the additional scanned image dots to the first scanned image dot correlates to the at least one halftone angle of the halftone image.

8. The method of claim 4, wherein locating the additional scanned image dots includes spiraling outward from the first scanned image dot within the sample area of the filtered image.

9. The method of claim 1, wherein diffusing the at least one scanned image dot includes distributing a darkness density of the at least one scanned image dot to at least one adjacent pixel.

10. A system for processing a scanned image (12) produced from a halftone image (14) formed of a plurality of image dots and having a halftone resolution and at least one halftone angle, the system comprising:
a halftone characteristic detection unit (22) adapted to detect at least one halftone characteristic (32) of the scanned image;
an image sectioning unit (24) adapted to divide the scanned image into a plurality of image sections (34) based on the at least one halftone characteristic, each of the image sections including a plurality of pixels (58) and at least one scanned image dot (50) formed within the plurality of pixels; and
an image enhancement unit (26) adapted to create a plurality of enhanced image sections (36), wherein the image enhancement unit is adapted to diffuse the at least one scanned dot of each of the image sections to create a respective one of the enhanced image sections.

11. The system of claim 10, wherein the halftone characteristic detection unit is adapted to detect at least one of the halftone resolution and the at least one halftone angle of the halftone image from the scanned image.

12. The system of claim 10, wherein the scanned image has a first resolution, and wherein the halftone characteristic detection unit includes a filter adapted to filter the scanned image and create a filtered image (44) having a second resolution, wherein the second resolution is less than the first resolution.

13. The system of claim 12, wherein the halftone characteristic detection unit is adapted to identify a sample area (46) of the filtered image having a predetermined darkness density, locate a first scanned image dot (51) within the sample area, locate, relative to the first scanned image dot, a plurality of additional scanned image dots (52) within the sample area, and determine a relationship between the first scanned image dot and the additional scanned image dots.

14. The system of claim 13, wherein the predetermined darkness density of the sample area is in a range of approximately 20 percent to approximately 50 percent.

15. The system of claim 14, wherein the predetermined darkness density of the sample area is approximately 40 percent.

16. The system of claim 13, wherein the halftone characteristic detection unit is adapted to determine at least one of a distance between the first scanned image dot and the additional scanned image dots and an orientation of the additional scanned image dots to the first scanned image dot, wherein the distance between the first scanned image dot and the additional scanned image dots correlates to the halftone resolution of the halftone image, and the orientation of the additional scanned image dots to the first scanned image dot correlates to the at least one halftone angle of the halftone image.

17. The system of claim 13, wherein the halftone characteristic detection unit is adapted to spiral outward from the first scanned image dot within the sample area of the filtered image to locate the additional scanned image dots.

18. The system of claim 10, wherein the image enhancement unit is adapted to distribute a darkness density of the at least one scanned image dot to at least one adjacent pixel.
